(19) Europäisches Patentamt

European Patent Office

Office européen des brevets

(11) **EP 1 453 718 B1**

(12) **EUROPÄISCHE PATENTSCHRIFT**

(45) Veröffentlichungstag und Bekanntmachung des Hinweises auf die Patenterteilung:
**10.05.2006 Patentblatt 2006/19**

(21) Anmeldenummer: **02795086.4**

(22) Anmeldetag: **02.12.2002**

(51) Int Cl.:
***B62D 5/04*** *(2006.01)*     ***B62D 6/00*** *(2006.01)*

(86) Internationale Anmeldenummer:
**PCT/EP2002/013602**

(87) Internationale Veröffentlichungsnummer:
**WO 2003/053763 (03.07.2003 Gazette 2003/27)**

(54) **LENKUNG MIT ANGETRIEBENEM UMLAUFGETRIEBE ZUR ERZEUGUNG EINES BESTIMMTEN HANDMOMENTS AM LENKRAD**

STEERING MECHANISM WITH POWERED PLANETARY GEAR SYSTEM FOR THE PRODUCTION OF A SPECIFIC HAND TORQUE ON THE STEERING WHEEL

SYSTEME DE DIRECTION DOTE D'UN ENGRENAGE PLANETAIRE COMMANDE DESTINE A PRODUIRE UN COUPLE MANUEL DETERMINE SUR LE VOLANT DE DIRECTION

(84) Benannte Vertragsstaaten:
**AT BE BG CH CY CZ DE DK EE ES FI FR GB GR IE IT LI LU MC NL PT SE SI SK TR**

(30) Priorität: **11.12.2001 DE 10160716**

(43) Veröffentlichungstag der Anmeldung:
**08.09.2004 Patentblatt 2004/37**

(73) Patentinhaber: **ThyssenKrupp Presta SteerTec GmbH**
**40476 Düsseldorf (DE)**

(72) Erfinder:
• **HERMANN, Jochen**
  **73312 Geisslingen (DE)**
• **VON HAMMEL, Klaus**
  **70619 Stuttgart (DE)**
• **STARBEK, Roman**
  **73733 Esslingen (DE)**
• **NIESSEN, Harwin**
  **73230 Kirchheim u. Teck (DE)**

(74) Vertreter: **LENZING GERBER**
**Patentanwälte**
**Postfach 20 05 09**
**40103 Düsseldorf (DE)**

(56) Entgegenhaltungen:
| | |
|---|---|
| **EP-A- 0 189 172** | **WO-A-00/43251** |
| **WO-A-01/49553** | **DE-A- 3 710 591** |
| **DE-A- 4 031 316** | **DE-A- 4 304 664** |
| **DE-A- 19 957 984** | **US-A- 5 327 986** |

**Beschreibung**

Die vorliegende Erfindung betrifft eine Kraftfahrzeuglenkung mit den Merkmalen des Oberbegriffs des Anspruchs 1.

Aus der DE 40 31 316 A1 ist eine Lenkung bekannt. Hier wird ein Überlagerungsgetriebe in der Lenksäule vorgeschlagen, das abhängig von der Lenkwinkelgeschwindigkeit über einen elektrischen Antriebsmotor dem mit der Ausgangsseite des Betriebes verbundenen Lenkgetriebe und damit den gelenkten Rädern einen zusätzlichen Lenkwinkel aufprägt. So kann das Übersetzungsverhältnis der Lenkung variiert werden. Außerdem kann bei Eingriffen eines Stabilitätskontrollprogramms ein Lenkeingriff unabhängig von dem Lenkwunsch des Fahrers erfolgen.

Diese zusätzlichen Lenkeingriffe bewirken aufgrund der Verkopplung von Lenkrad und Lenkgetriebe eine zusätzliche selbstständige Drehung des Lenkrades. Daher muß die Eingangsseite des Überlagerungsgetriebes während des autonomen Lenkeingriffs abgestützt werden.

Dieses unvermittelt auftretende Drehmoment ist nachteilig. Insbesondere ist das System nahezu unwirksam, wenn der Fahrer keine Hand am Lenkrad hat oder das Lenkrad beispielsweise in Geradeausfahrt nur mit sehr geringer Kraft führt.

Aus der DE 43 04 664 ist eine Kraftfahrzeuglenkung mit Sensoren und einem ersten Antrieb bekannt, wobei der Antrieb von einer elektronischen Steuerung angesteuert wird und auf den Eingang des Lenkgetriebes wirkt, und die Signale der Sensoren Eingangssignale für die Steuerung sind. Die Kraftfahrzeuglenkung weist darüber hinaus ein Umlaufgetriebe auf, welches eingangsseitig mit der Lenksäule und ausgangsseitig mit dem Lenkgetriebe verbunden ist. Darüber hinaus ist ein zweiter Antrieb vorgesehen, der das Gehäuse des Umlaufgetriebes zur Einstellung eines Handmomentes antreibt.

Es ist daher Aufgabe der vorliegenden Erfindung, eine gattungsgemäße Lenkung so zu verbessern, dass am Lenkrad stets ein von der Fahrzeuglenkung vorgebbares Handmoment am Lenkrad einregelbar bzw. einstellbar ist.

Diese Aufgabe wird erfindungsgemäß von einer Lenkung mit den Merkmalen des Anspruchs 1 gelöst. Weitere vorteilhafte Ausführungsformen ergeben sich durch die Merkmale der Unteransprüche.

Die erfindungsgemäße Kraftfahrzeuglenkung weist ein getrenntes Steuerungs- bzw. Regelungskonzept für die Lageregelung der Zahnstange bzw. der gelenkten Räder und eine Momentensteuerung bzw. -regelung für das am Lenkrad spürbare Handmoment auf. Durch den Einsatz eines Hohlwellenmotors als Antrieb, dessen Rotor mit dem Gehäuse des Umlaufgetriebes fest verbunden ist, ergibt sich eine besonders vorteilhafte kompakte Bauform. Vorteilhaft kann hierzu das Gehäuserad des Umlaufgetriebes als Rotor mit eingelassenen Permanentmagneten verwendet werden, welches von außen mittels Spulen angetrieben wird. Zur Redundanzbildung können vorteilhaft zwei Statoren mit entsprechenden Spulen das als Rotor ausgebildete Gehäuse umgreifen, wodurch zwei getrennte Antriebe auf einen gemeinsamen Rotor wirken.

Das Umlaufgetriebe ist ferner vorteilhaft ein Planetengetriebe, so dass eine oben beschriebene Trennung der Steuerungs- bzw. Regelungskonzepte problemlos aufgrund der drei Freiheitsgrade des Umlaufgetriebes möglich ist. Auf Basis der gemessenen Winkelstellung des Lenkrads bzw. des Lenkgestänges und evtl. Winkelvorgaben durch ein elektronisches Fahrzeugstabilitätsprogramms (ESP) wird die Stellung der Fahrzeugräder vom Lage-Regler eingeregelt. Sofern ein Momentensensor in der Kraftfahrzeuglenkung das Ist-Handmoment erfaßt, kann das Handmoment mittels eines Reglers sowohl im normalen Fahrbetrieb als auch beim Eingriff eines Fahrzeugstabilitätsprogramms (ESP) situationsbedingt eingeregelt werden. Fehlt ein derartiger Sensor z.B. aus Kostengründen, so ist es aufgrund der kinematischen Beziehungen möglich, mittels einer Momentensteuerung das Handmoment vorzugeben. Die vom Antrieb des Umlaufgetriebes auf das Ritzel bzw. die Zahnstange ausgeübten Kräfte, die beim Erzeugen des Handmoments am Lenkrad entstehen, können problemlos von der Lageregelung kompensiert werden.

Sofern ein Fahrzeugstabilitätsprogramm einen Zusatzlenkwinkel aufprägt, wird die Zahnstange von der Lage-Regelung entsprechend vom Servoantrieb verstellt. Eine Rückwirkung auf das Lenkrad wird mit Hilfe der Handmomentensteuerung bzw. -regelung kompensiert, so dass die das Fahrzeug lenkende Person den autonomen Lenkeingriff des Fahrzeugstabilitätsprogramms vorteilhaft nicht spürt. In einer besonderen Ausführungsform ist jedoch problemlos möglich, der Person insbesondere während des autonomen Lenkeingriffs des Fahrzeugstabilitätsprogramms dessen Aktivität auch über das Lenkrad mitzuteilen. Hierfür kann, ähnlich dem Vibrieren bzw. Rütteln des Bremspedals beim ansprechenden Anti-Blockier-System, dem normalen Handmoment ein zusätzliches Handmoment oder Momentenverlauf überlagert werden, wodurch z.B. ein Vibrieren am Lenkrad zu spüren ist.

Durch die vorteilhafte Entkopplung beider Regelkreise, können diese für sich relativ einfach gestaltet und optimiert werden. Die erfindungsgemäße Kraftfahrzeuglenkung benötigt vorteilhaft keine zusätzlichen Sensoren.

Die erfindungsgemäße Kraftfahrzeuglenkung kann vorteilhaft relativ problemlos so gestaltet werden, dass sogenannte Steerby-wire-Funktionen möglich sind. Durch die mechanische Kopplung zwischen Lenkrad und Zahnstange ist jedoch auch bei Ausfall aller elektronischen Komponenten stets noch eine mechanische Rückfallebene vorhanden.

Eine variable Lenkübersetzung kann erzielt werden, wenn bei einer Drehung des Lenkrads der Antrieb für das Umlaufgetriebe derart angesteuert wird, dass sich das übersetzungsverhältnis zwischen Eingangs- und Ausgangsseite des Umlaufgetriebes gegenüber dem Stillstand des Überlagerungsantriebs verändert.

Durch Verwendung einer Selbsthemmung wird zudem vorteilhaft kein zusätzlicher Festsetz- bzw. Arretiermechanismus benötigt, noch muß Energie aufgebracht werden, um das Gehäuse mittels des Antriebs am Verdrehen zu hindern. Lediglich bei einem Eingriff des Fahrzeugstabilitätsprogramms muß dann das Gehäuse eine Drehbewegung zur Kompensation des Zusatzlenkwinkels ausführen.

Sofern kein selbsthemmender Antrieb oder selbsthemmendes Getriebe für den Antrieb des Gehäuses des Umlaufgetriebes verwendet wird, ist eine Bremse zum Blockieren des Gehäuses für den Fall vorzusehen, dass der Antrieb des Gehäuses oder einer seiner Steuerungskomponenten ausfällt. Damit die lenkende Person auch bei Ausfall des Antriebs sicher weiterfahren kann, kann zur Bildung einer Rückfallebene ein zweiter (redundanter) Antrieb für das Gehäuse des Umlaufgetriebes vorgesehen werden.

Es ist selbstverständlich ebenso möglich auch andere Systeme zur Erzielung einer höheren Sicherheit, insbesondere die IstWert gebenden Sensoren bzw. Signalgeber mehrfach, d.h. redundant vorzusehen. Als Lenkwinkelsensoren können vorteilhaft zwei "Fail-tolerante" Sensoren vorgesehen werden, da sie auch im Fehlerfall gültige Winkelsignale ausgeben. Darüber hinaus sind drei "fail-silent" Winkelgeber, wobei für jeden Freiheitsgrad des Umlaufgetriebes jeweils ein Winkelgeber vorgesehen ist, ausreichend, da im Fehlerfall jederzeit der Winkel des defekten Sensors aus den Winkeln der restlichen zwei Winkelsensoren ermittelt werden kann. Auch können die gemessenen Winkel im Normalbetrieb aufgrund der Überbestimmung durch Gegenvergleich überprüft werden.

Nachfolgend werden anhand von Figuren mehrere Ausführungsformen der erfindungsgemäßen Kraftfahrzeuglenkung erläutert.

Es zeigen:

Fig. 1: eine erfindungsgemäße Kraftfahrzeuglenkung in einer schematischen Darstellung;

Fig. 2: ein Umlaufgetriebe für die Kraftfahrzeuglenkung gemäß der Figur 1 in einer schematischen Querschnittsdarstellung:

Fig. 3: eine Kraftfahrzeuglenkung gemäß Figur 1 mit zugehörigem Regelungskonzept.

Fig. 4 eine weitere erfindungsgemäße Kraftfahrzeuglenkung, die im Gegensatz zur Lenkung gemäß der Figuren 1 und 3 einen Momentenregler aufweist;

Fig. 5 und 6: Darstellung eines Hohlwellenmotors als Antrieb für das Gehäuse des Umlaufgetriebes;

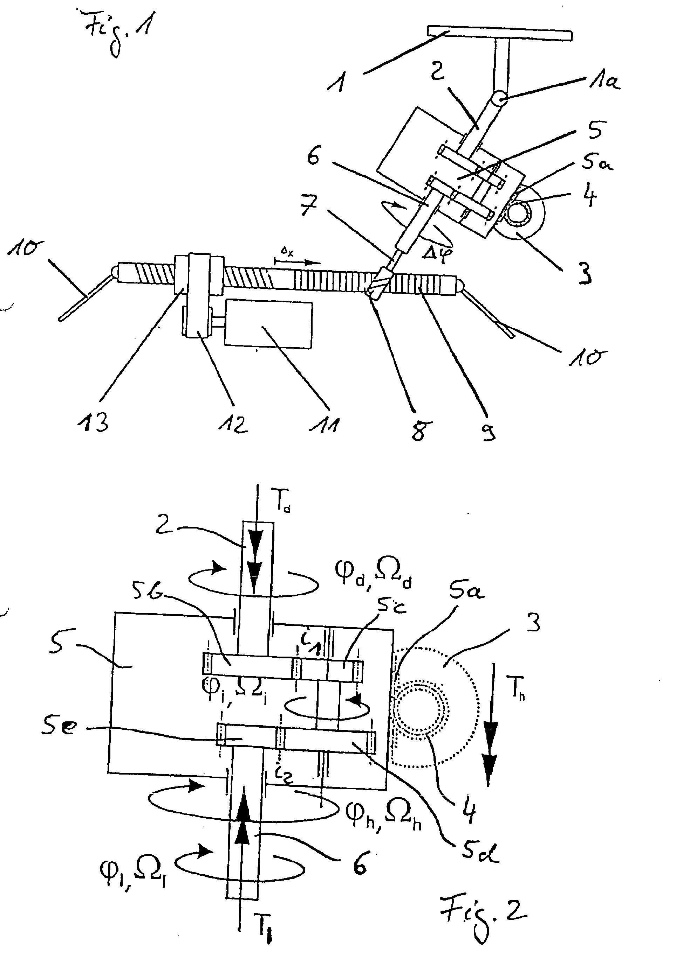

In der Figur 1 ist eine erfindungsgemäße Kraftfahrzeuglenkung schematisch veranschaulicht. Die Lenkung weist ein Lenkrad 1 auf, das drehfest z. B. über ein Kardangelenk 1a auf eine Eingangswelle 2 eines Umlaufgetriebes 5 wirkt. Das Umlaufgetriebe 5 hat weiter eine Ausgangswelle 6, die mit einem Lenkritzel 8 verbunden ist. Das Lenkritzel 8 wiederum kämmt in an sich bekannter Weise mit einer Zahnstange 9, die im Bereich der gelenkten Achse eines Kraftfahrzeuges über Spurstangen 10 bei Drehung des Lenkritzels 8 eine Radwinkeländerung der gelenkten Räder bewirkt.

Das Umlaufgetriebe 5, welches als Planetengetriebe ausgebildet sein kann, trägt an einer Außenseite einen Antrieb 3 in Form eines Elektromotors, der über ein Schneckenrad 4 mit einer gehäuseseitigen Verzahnung 5a des Umlaufgetriebes 5 kämmt. Ein elektrischer Servoantrieb 11 ist der Zahnstange 9 zugeordnet und wirkt über ein Ritzel und einen Zahnriemen 12 auf einen Kugelumlauf 13, der mit einem daran angepaßten Gewinde in Eingriff steht, so dass eine Drehung des Kugelumlaufs 13 ebenfalls eine Verlagerung $\Delta x$ der Zahnstange 9 und damit eine Radwinkeländerung bewirkt.

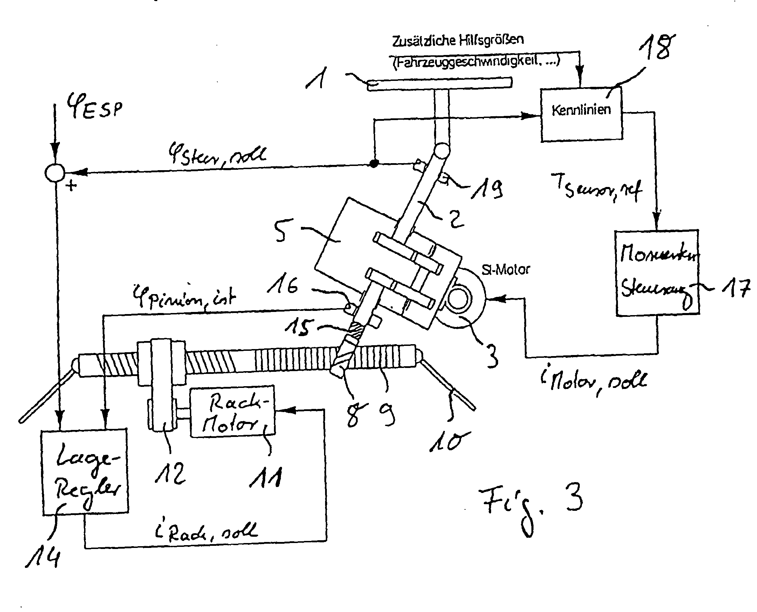

In der Fig. 2 ist das Umlaufgetriebe 5 näher dargestellt. Die Eingangswelle 2 trägt ein Sonnenrad 5b, das mit einem ersten Satz von Planetenrädern 5c kämmt. Das erste Planetenrad 5c ist über eine Welle drehfest mit einem zweiten Planetenrad 5d verbunden, das wiederum mit einem entsprechenden Sternrad 5e der Ausgangswelle 6 kämmt. Die Achse der Planetenräder 5c und 5d ist in dem Gehäuse 5 gelagert. Das Gehäuse 5 selbst ist um die gemeinsame Achse der Eingangswelle 2 und der Ausgangswelle 6 drehbar und weist zum Antrieb die äußere Verzahnung 5a auf, die zusammen mit dem Ritzel 4 des Antriebs 3 eine je nach Bedarf selbsthemmende oder nicht selbsthemmende Schneckenverzahnung bildet.

Bei stillstehendem Umlaufgetriebe 5 wird eine Drehung der Eingangswelle 2 über die Zahnräder 5b, 5c, 5d und 5e in eine entsprechende gleichsinnige Drehung der Ausgangswelle 6 umgesetzt, wobei bei dem Ausführungsbeispiel gemäß der Fig. 2 das Übersetzungsverhältnis derart gewählt ist, daß die Drehgeschwindigkeit der Ausgangswelle 6 größer ist als diejenige der Eingangswelle 2.

Eine zusätzliche Drehung des Gehäuses 5 über den Schneckenantrieb 4, 5a führt zu einer zusätzlichen aufgeprägten Winkelgeschwindigkeit, die die Winkelgeschwindigkeit der Ausgangswelle 6 verändert, und zwar, gegenüber der Eingangswelle 2, je nach Drehrichtung des Antriebs 3, entweder beschleunigt oder verzögert. Durch die Übersetzung des Umlaufgetriebes kann die Gehäusewinkelgeschwindigkeit gezielt beeinflußt werden. Durch Verdrehen des Gehäuses entsteht während eines Lenkeingriffs der nachteilige Effekt, daß der Antrieb das Gehäuse ständig mitdrehen muß, um die gewünschte Übersetzung von Lenkrad zu Zahnstange zu realisieren. Die Einzelübersetzungen $i_1$ und $i_2$ des Umlaufgetriebes sind daher geeignet so zu wählen, daß sich bei stehendem Gehäuse ein gewünschtes Übersetzungsverhältnis $i_{epic}$ von Lenkrad zur Zahnstange einstellt. Wird der Lenkradwinkel unter Berücksichtigung dieser Übersetzung als Sollwert an die Lageregelung der Zahnstange weitergegeben, so steht das Gehäuserad des Umlaufgetriebes auch während des normalen Fahrbetriebs, das heißt Lenkwinkelvorgabe ausschließlich durch den Fahrer und kein ESP-Eingriff, still. Lediglich bei dem Eingriff eines Fahrzeugstabilitätsprogramms (ESP) muß das Gehäuse eine Drehbewegung ausführen. Bei einer derartigen gewählten Übersetzung wird der Nachteil vermieden, daß beim Auftreten einer Störung des Antriebs 3 vor dem Zurücklenken in die Geradeausfahrt beim Zurücklenken ein anderes Übersetzungsverhältnis von Lenkrad zu Zahnstange entsteht, wodurch sich eine Schrägstellung des Lenkrads bei nachfolgender Geradeausfahrt ergeben würde.

Das in Fig. 2 dargestellte Umlaufgetriebe hat drei rotatorische Freiheitsgrade, nämlich die Rotation der Eingangswelle, die der Ausgangswelle und die des Außengehäuses. Sind zwei der Freiheitsgrade bekannt, so ist der dritte aus ihnen eindeutig bestimmbar. Bei einem als masselos angenommenen Getriebe mit 100% Wirkungsgrad gilt allgemein für das Momentengleichgewicht:

$$T_d \ + \ T_h \ - \ T_l \ = \ 0$$

Ferner gilt die Leistungsbilanz:

$$T_d \ \Omega_d \ + \ T_h \ \Omega_h \ - \ T_l \ \Omega_l \ = \ 0$$

Mit dieser Gleichung kann bei Einleitung eines Moments die Aufteilung des Momentes auf die verbleibenden Achsen berechnet werden.

Zur Regelung des Systems muß der Bewegungszustand des Umlaufgetriebes bekannt sein. Das heißt, es müssen mindestens zwei der drei Freiheitsgrade durch absolute Winkelsensoren erfaßt werden. Alternativ zur Position der Eingangswelle des Umlaufgetriebes (Anbindung zum Lenkrad) kann auch der Lenkwinkel des Lenkrads und das entsprechende Moment am Momentensensor erfaßt werden. Aus diesen beiden Größen läßt sich die Position der Eingangswelle ebenfalls ermitteln. Weiterhin kann alternativ zur Position der Ausgangswelle des Umlaufgetriebes (Anbindung zum Lenkgetriebe) auch die absolute Lage der Zahnstange oder der absolute Winkel des Rack-Motors gemessen werden.

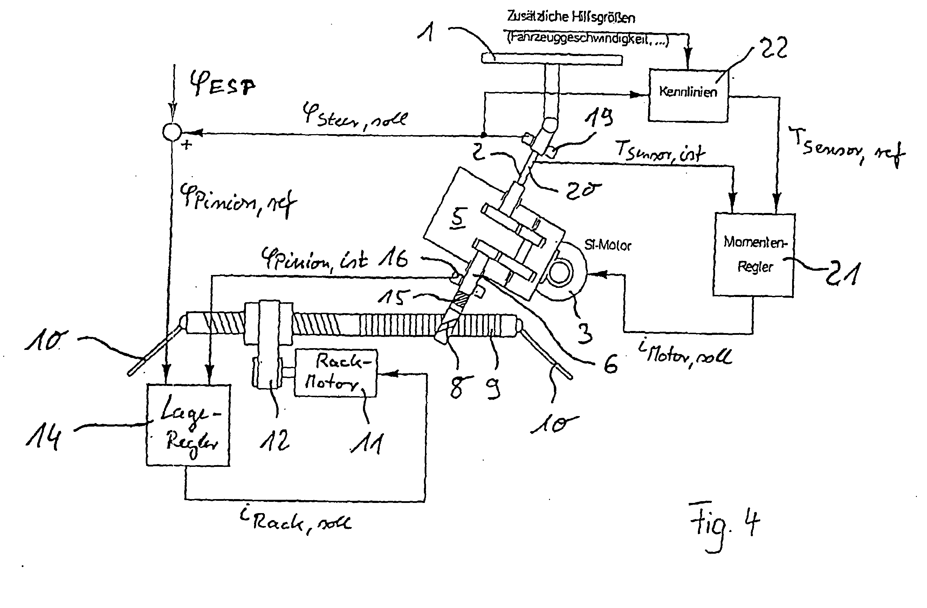

Je nach Regelungskonzept wird das Handmoment entweder gesteuert (Fig. 3) oder eingeregelt (Fig. 4). Zur Momentenregelung ist das Messen mindestens eines Moments im Strang zwischen dem Ritzel und dem Lenkrad notwendig. Bei der Momentensteuerung des Handmoments kann der Handmomentensensor, wie die Fig. 3 zeigt, entfallen.

Prägt man dem Gehäuserad des Umlaufgetriebes gemäß Fig. 3 ein Moment $T_h$ auf, so stützt sich dieses Moment zu einem Teil an der Eingangswelle 2 (Fahrermoment) ab, und zu einem anderen Teil an der Ausgangswelle ab. Mit Hilfe der folgenden Beziehung:

$$i_{epic} = i_1 * i_2 = \frac{\Omega_d - \Omega_h}{\Omega_l - \Omega_h} = const.$$

$$T_d + T_h - T_l = 0$$

$$T_d \Omega_d + T_h \Omega_h - T_l \Omega_l = 0$$

$$T_h = T_l \left( 1 - \frac{1}{i_{epic}} \right)$$

Das heißt, um ein Handmoment $T_d$ am Lenkrad zu erzeugen, muß die Bedingung

$$T_h = T_d \left( i_{epic} - 1 \right)$$

als Stellgröße auf den Motor 3 aufgeschaltet werden. So läßt sich durch diese eindeutige Beziehung jedes Moment am Lenkrad in Form einer Steuerung einstellen. Ein Momentensensor ist hierbei nicht erforderlich.

Wie in Fig. 3 dargestellt, wird die Verdrehung des Lenkrads 1 mittels des Winkelsensors 19 ermittelt, der die Sollgröße $\varphi_{steer,soll}$ erzeugt. Diese Sollgröße ist gleichzeitig Eingangsgröße für Kennlinienfeld 18. Eventuell dienen zusätzliche Hilfsgrößen, wie z.B. die Fahrzeuggeschwindigkeit, als zusätzliche Eingangsgrößen für das Kennlinienfeld 18, mittels dem das Referenzsignal $T_{sensor,ref}$ erzeugt wird und Eingangsgröße für die Momentensteuerung 17, die die Regelgröße $i_{Motor,soll}$ für den Antrieb 3 erzeugt. Der Motor 3 treibt das Gehäuse des Umlaufgetriebes 5 an. Hierdurch kann bei Vorhandensein eines Reaktionsmoments auf dem Ritzel 8 ein dem Fahrzeugzustand entsprechendes Handmoment auf die Eingangswelle 2 aufgeprägt werden. Von der Momentensteuerung entkoppelt ist der Lageregler 14, welcher zur Verstellung der Zahnstange 9 dient. Die Zahnstange 3 ist über die Spurstangen 10 mit den gelenkten Rädern (nicht dargestellt) verbunden, wodurch die Verstellung der Zahnstange 9 zu einer Verstellung der gelenkten Räder führt. Der Sollgröße $\varphi_{steer,soll}$ wird der Zusatzwinkel $\varphi_{ESP}$ aufgeschaltet. Die Summe dieser beiden Winkelgrößen ist eine Eingangsgröße des Lagereglers 14. Eine weitere Eingangsgröße des Lagereglers 14 ist entweder die Stellung des Ritzels 8 oder die Stellung der Zahnstange 9. In der Figur 3 wird die Winkelstellung des Ritzels 8 mittels des Winkelsensors 16 gemessen, wobei der Winkelsensor 16 das Ist-Signal $\varphi_{Pinion,ist}$ an den Lagerregler 14 weitergibt. Der Lageregler 14 erzeugt den Sollstrom $i_{reg,soll}$, der zur Steuerung des Rack-Motors 11 dient.

Die Figur 4 zeigt im Gegensatz zu der Figur 3 eine Momentenregelung wobei die aus der Figur 3 bekannte Momentensteuerung 17 dahingehend erweitert wird, daß sie als zusätzliche Eingangsgröße das am Lenkrad 1 anliegende Handmoment über den Momentensensor 20, welcher das Signal $T_{sensor,ist}$ erzeugt, erhält. Der Momentensensor 20 kann an beliebiger Stelle in der Lenkung angeordnet werden, es ist jedoch sinnvoll den Sensor 20 möglichst dicht am Lenkrad 1 anzuordnen, damit der Momentenregler 21 möglichst einfach realisiert werden kann. Um die beiden Systeme zusätzlich zu entkoppeln, ist es möglich ein Dämpfungselement 15 zwischen Zahnritzel 8 und Ausgangswelle 6 des Umlaufgetriebes 5 anzuordnen. Für das oberhalb des Umlaufgetriebes liegende Teilsystem ist somit eine Momentenregelung vorgesehen. Diese erzeugt aus dem gemessenen Moment $T_{sensor,ist}$ am Drehstab und dem gewünschten Moment $T_{sensor,ref}$ eine geeignete Stellgröße $i_{Motor,soll}$ für den Motor 3 des Umlaufgetriebes 5. Das gewünschte Moment $T_{Sensor,ref}$ ist dabei vom Lenkradwinkel $\varphi_{Steer,soll}$ und/oder weiteren Hilfsgrößen, wie z. B. der Fahrzeuggeschwindigkeit oder ähnlichem abhängig und wird dem Momentenregler als Referenzsignal $T_{sensor,ref}$ zugeführt. Das Teilsystem unterhalb des Umlaufgetriebes 5 ist lagegeregelt ausgeführt. Dabei setzt sich die Soll-Lage $\varphi_{Pinion,ref}$ für das Ritzel (und damit auch für die Zahnstange) aus der Summe zweier der beiden Größen $\varphi_{Steer,soll}$ sowie dem vom elektronischen Stabilitätsprogramm vorgegebenen Zusatzwinkel $\varphi_{Esp}$ zusammen. Die Summe dieser beiden Winkel wird dem Lageregler als Referenzsignal $\varphi_{Pinion,ref} = \varphi_{Steer,soll} + \varphi_{Esp.}$ übergeben.

Der Lageregler erzeugt mit Hilfe des Referenzsignals $\varphi_{Pinion,ref}$ und der gemessenen Lage $\varphi_{Pionion,Ist}$ eine geeignete Stellgröße $i_{motor,rack}$, so daß sich der gewünschte Ritzelwinkel, welcher proportional zum Zahnstangenweg ist, einstellt.

Die in Figur 4 dargestellte Sensor-Konfiguration stellt nur eine von verschiedenen Möglichkeiten dar. Es ist auch denkbar, z.B. einen Lineargeber an der Zahnstange vorzusehen oder aber den Winkel des Rack-Motors anstelle des Winkelsensors am Ritzel zu verwenden. Grundsätzlich gilt für das vorgestellte Konzept, daß je eine Lageinformation über das oberhalb bzw. unterhalb des Umlaufgetriebes liegenden Teilsystem vorhanden sein muß. Eine Einrichtung zur Erfassung des Drehmomentes vereinfacht die Regelung zur Erzeugung eines gewünschten Handmomentes, ist dazu aber nicht unbedingt erforderlich.

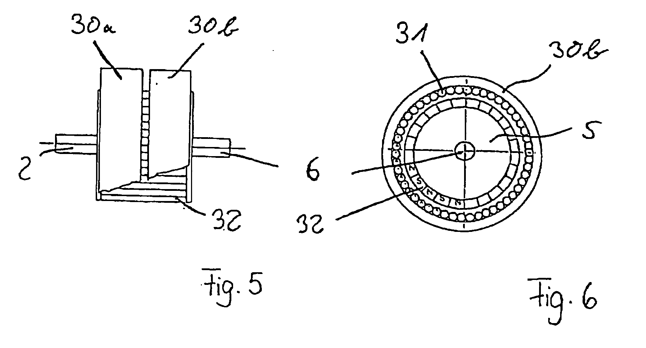

Die Figuren 5 und 6 zeigen eine erfindungsgemäße Lenkung mit einem Antrieb für das Umlaufgetriebe 5, wobei im Gehäuse des Umlaufgetriebes Permanentmagnete 32 angeordnet sind, die zusammen mit Spulen 31 die Holwellenmotoren 30a, 30b bilden. In Figur 7 dargestellt, sind zwei Statoren von zwei Hohlwellenmotoren 30a, 30b um den gemeinsamen Rotor 32 angeordnet, so daß bei Ausfall eines Motors 30a, 30b stets noch ein weiterer Motor zur Bildung einer Notfallebene vorhanden ist.

Bei Einsatz von nicht selbsthemmenden Antrieben bzw. Getrieben ist eine Bremse für das Blockieren des Antriebs vorzusehen, wobei vorteilhaft eine mechanische Bremse mit Reibbelägen, welche im Normalbetrieb geöffnet ist und bei Stromausfall schließt, vorzusehen ist.

**Patentansprüche**

1. Kraftfahrzeuglenkung mit folgenden Elementen:

   - einem Lenkrad (1), das drehfest mit einer Lenksäule (2) verbunden ist;
   - einem Lenkritzel (8), das mit einer Zahnstange (9) kämmt;
   - einem Winkelsensor (19) zur Erfassung der Stellung der Lenksäule (2) bzw. des Lenkrads (1) und Generierung eines entsprechenden Signals;
   - einem ersten Antrieb (11), der von einer ersten elektronischen Steuerung (14) angesteuert wird und der auf das Lenkritzel (8) oder auf die Zahnstange (9) wirkt, wobei das Signal des Winkelsensors (19) zur Erfassung der Stellung der Lenksäule (2) bzw. des Lenkrads (1) ein Eingangssignal für die Steuerung (14) ist;
   - einem eingangsseitig mit der Lenksäule (2) und ausgangsseitig mit dem Lenkritzel (8) verbundenen Umlaufgetriebe (5);
   - einem zweiten Antrieb (3), der das Gehäuse des Umlaufgetriebes (5) antreibt;
   - eine Momentensteuerung (17, 18), die den zweiten Antrieb (3) derart ansteuert, wobei sich durch das vom zweiten Antrieb (3) auf das Gehäuse des Umlaufgetriebes (5) aufgebrachte Moment ein definiertes Handmoment am Lenkrad (1) einstellt,

   **dadurch gekennzeichnet , dass**

   der zweite Antrieb ein Hohlwellenmotor ist, dessen Rotor mit dem Gehäuse des Umlaufgetriebes (5) fest verbunden ist.

**2.** Kraftfahrzeuglenkung nach Anspruch 1, **dadurch gekennzeichnet , dass** die Momentensteuerung (17, 18) des zweiten Antriebs (3) von der ersten elektronischen Steuerung (14) des ersten Antriebs (11) entkoppelt ist.

**3.** Kraftfahrzeuglenkung nach Anspruch 1 oder 2, **dadurch gekennzeichnet , dass** die erste Steuerung (14) dazu eingerichtet ist, aufgrund von Sensorsignalen, insbesondere Gierwinkelsignalen, über den insbesondere als Servoantrieb ausgebildeten ersten Antrieb (11) einen Zusatzlenkwinkel ($\varphi_{ESP}$) aufzuprägen, und daß die Momentensteuerung (17, 18) den zweiten Antrieb (3) derart ansteuert, dass eine Rückwirkung dieses Zusatzlenkwinkels ($\varphi_{ESP}$) auf das Lenkrad (1) verringert oder kompensiert wird.

**4.** Kraftfahrzeuglenkung nach einem der vorhergehenden Ansprüche, **dadurch gekennzeichnet , dass** bei Störung, insbesondere bei Stillstand des zweiten Antriebs (3), eine mechanische Zwangskopplung zwischen Lenkrad (1) und Zahnstange (9) besteht, die durch Festsetzen des Gehäuses des Umlaufgetriebes (5) realisiert wird.

**5.** Kraftfahrzeuglenkung nach Anspruch 4, **dadurch gekennzeichnet , dass** das Festsetzen mittels Formschluß oder Reibschluß, oder über einen Bolzeneingriff oder mittels einer Bremse erfolgt.

**6.** Kraftfahrzeuglenkung nach einem der vorhergehenden Ansprüche, **dadurch gekennzeichnet , dass** ein Momentensensor (20) zwischen Lenkrad (1) und Lenkritzel (8) im Lenkgestänge angeordnet ist.

**7.** Kraftfahrzeuglenkung nach einem der vorhergehenden Ansprüche, **dadurch gekennzeichnet , dass** der Momentensensor (20) das am Lenkrad (1) angreifende Handmoment erfaßt und ein entsprechendes Signal erzeugt.

**8.** Kraftfahrzeuglenkung nach Anspruch 6 oder 7, **dadurch gekennzeichnet, dass** das Signal des Momentensensors (20) eine Eingangsgröße der Momentensteuerung bzw. -regelung (21) ist, anhand derer ein dem Fahrzeugzustand entsprechendes Handmoment mittels des zweiten Antriebs (3) eingeregelt wird.

**9.** Kraftfahrzeuglenkung nach Anspruch 8, **dadurch gekennzeichnet, dass** weitere Zustandsgrößen des Fahrzeugs Eingangsgrößen für die Momentensteuerung bzw. -regelung (21) bilden.

**10.** Kraftfahrzeuglenkung nach Anspruch 1, **dadurch gekennzeichnet , dass** zwei Hohlwellenmotore (30a, 30b) das Gehäuse des Umlaufgetriebes (5) umgreifen, wobei deren Rotoren mit dem Gehäuse fest verbunden sind oder bei denen das Gehäuse Bestandteil der Rotoren ist.

**11.** Kraftfahrzeuglenkung nach einem der vorhergehenden Ansprüche **dadurch gekennzeichnet, dass** ein weiterer redundanter Antrieb bei Ausfall oder Störung des zweiten Antriebs zur Handmomentenerzeugung vorgesehen ist.

**12.** Kraftfahrzeuglenkung nach einem der vorherigen Ansprüche, **dadurch gekennzeichnet, dass** die erste elektronische Steuerung (14) Signale eines elektronischen Fahrzeugstabilitätsprogramms verarbeitet.

**13.** Kraftfahrzeuglenkung nach einem der vorherigen Ansprüche, **dadurch gekennzeichnet, dass** bei Bedarf im Betrieb vom ersten Antrieb (11) eine autonome Verlagerung der Zahnstange (9) ohne einen korrespondierenden, am Lenkrad (1) eingeleiteten gewünschten Lenkwinkel erfolgt und dass mit dem zweiten Antrieb (3) das Umlaufgetriebe (5) derart angesteuert wird, dass am Lenkrad (1) keine der Verlagerung der Zahnstange (9) entsprechende Lenkradwinkelveränderung auftritt.

**14.** Kraftfahrzeuglenkung nach Anspruch 13, **dadurch gekennzeichnet , dass** die Momentensteuerung bzw. -regelung (17, 18, 21) während, davor oder nach der autonomen Verlagerung der Zahnstange (9) ein definiertes Handmoment bzw. einen definierten Handmomentenverlauf am Lenkrad (1) mittels des zweiten Antriebs (3) erzeugt.

**15.** Kraftfahrzeuglenkung nach einem der vorherigen Ansprüche, **dadurch gekennzeichnet , dass** das Übersetzungsverhältnis von Lenkrad (1) zu Lenkritzel (8) m normalen Fahrbetrieb abhängig vom Fahrzustand, insbesondere von der Geschwindigkeit des Fahrzeugs variiert wird.

**16.** Kraftfahrzeuglenkung nach einem der vorherigen Ansprüche, **dadurch gekennzeichnet, dass** die erste elektronische Steuerung (14) ein durch die Momentensteuerung erzeugtes Moment am Ritzel (8) bzw. eine auf die Zahnstange (9) wirkende Kraft kompensiert.

**17.** Kraftfahrzeuglenkung nach einem der vorherigen Ansprüche, **dadurch gekennzeichnet, dass** die Momentensteuerung bzw. -regelung den zweiten Antrieb (3) derart ansteuert, dass das Gehäuse des Umlaufgetriebes (5) im normalen Fahrbetrieb nur um eine Null-Lage herum verschwenkt bzw. verdreht.

**18.** Kraftfahrzeuglenkung nach einem der vorherigen Ansprüche, **dadurch gekennzeichnet , dass** bei Stillstand des Gehäuses des Umlaufgetriebes (5) dessen Übersetzungsverhältnis zwischen Eingangsseite (2) und Ausgangsseite (6) ungleich 1:1, insbesondere 1:1,44 ist.

19. Kraftfahrzeuglenkung nach einem der vorherigen Ansprüche, **dadurch gekennzeichnet , dass** die Momentensteuerung bzw. -regelung ein Zustandsregler ist, der zunächst eine erste Soll-Größe, insbesondere den Soll-Strom $i_{motor,Null}$ berechnet, bei dem sich kein Handmoment am Lenkrad ergeben würde.

20. Kraftfahrzeuglenkung nach Anspruch 19, **dadurch gekennzeichnet, dass** in einem nachfolgenden Schritt der ersten Soll-Größe eine zweite Soll-Größe aufsummiert wird, wobei die Summe der Soll-Größen ein dem jeweiligen aktuell aufzuprägenden Handmoment am Lenkrad entspricht.

21. Kraftfahrzeuglenkung nach Anspruch 19 oder 20, **dadurch gekennzeichnet, dass** die Kraftfahrzeuglenkung zusätzliche Zustandsgrößen des Kraftfahrzeugs, die nicht über Sensoren ermittelt werden, aufgrund der Berechnungen eines das Kraftfahrzeug simulierenden Beobachters erhält.

**Claims**

1. Motor vehicle steering system with the following elements:

   - a steering wheel (1), which is non-rotatably connected to a steering column (2);
   - a steering pinion (8), which meshes with a rack (9);
   - an angle sensor (19) for detecting the position of the steering column (2) or of the steering wheel (1) and generating a corresponding signal;
   - a first drive (11), which is controlled by a first electronic control unit (14) and which acts on the steering pinion (8) or on the rack (9), wherein the signal of the angle sensor (19) for detecting the position of the steering column (2) or of the steering wheel (1) is an input signal for the control unit (14);
   - a planetary gear unit (5) connected on the input side to the steering column (2) and on the output side to the steering pinion (8);
   - a second drive (3), which drives the casing of the planetary gear unit (5);
   - a torque control unit (17, 18), which controls the second drive (3) such that, wherein a defined manual torque is produced at the steering wheel (1) through the torque which is applied by the second drive (3) to the casing of the planetary gear unit (5),

**characterised in that**
the second drive is a hollow-shaft motor, the rotor of which is firmly connected to the casing of the planetary gear unit (5).

2. Motor vehicle steering system according to Claim 1, **characterised in that** the torque control unit (17, 18) of the second drive (3) is isolated from the first electronic control unit (14) of the first drive (11).

3. Motor vehicle steering system according to Claim 1 or 2, **characterised in that** the first control unit (14) is adapted to superpose an auxiliary steering angle ($\varphi_{ESP}$) on the basis of sensor signals, in particular yaw angle signals, via the first drive (11), which is formed in particular as a servo drive, and that the torque control unit (17, 18) controls the second drive (3) such that a reaction of this auxiliary steering angle ($\varphi_{ESP}$) on the steering wheel (1) is reduced or compensated.

4. Motor vehicle steering system according to any one of the preceding Claims, **characterised in that**, in the event of a disturbance, in particular if the second drive (3) is at a standstill, a mechanical forced coupling between the steering wheel (1) and the rack (9) takes place by arresting the casing of the planetary gear unit (5).

5. Motor vehicle steering system according to Claim 4, **characterised in that** the arrest takes place by means of positive locking or frictional locking, or via a pin engagement or by means of a brake.

6. Motor vehicle steering system according to any one of the preceding Claims, **characterised in that** a torque sensor (20) is disposed between the steering wheel (1) and the steering pinion (8) in the steering linkage.

7. Motor vehicle steering system according to any one of the preceding Claims, **characterised in that** the torque sensor (20) detects the manual torque acting on the steering wheel (1) and generates a corresponding signal.

8. Motor vehicle steering system according to Claim 6 or 7, **characterised in that** the signal of the torque sensor (20) is an input quantity of the torque control or regulating unit (21), on the basis of which a manual torque corresponding to the vehicle state is set by means of the second drive (3).

9. Motor vehicle steering system according to Claim 8, **characterised in that** further state quantities of the vehicle form input quantities for the torque control or regulating unit (21).

**10.** Motor vehicle steering system according to Claim 1, **characterised in that** two hollow-shaft motors (30a, 30b) embrace the casing of the planetary gear unit (5), wherein the rotors thereof are firmly connected to the casing or in the case of which the casing is a component part of the rotors.

**11.** Motor vehicle steering system according to any one of the preceding Claims, **characterised in that** a further redundant drive is provided for manual torque generation in the event of failure or a disturbance of the second drive.

**12.** Motor vehicle steering system according to any one of the preceding Claims, **characterised in that** the first electronic control system (14) processes signals of an electronic vehicle stability program.

**13.** Motor vehicle steering system according to any one of the preceding Claims, **characterised in that**, if required, the rack (9) undergoes an autonomous displacement without a corresponding desired steering angle introduced at the steering wheel (1) when the first drive (11) is operating, and that the planetary gear unit (5) is controlled by way of the second drive (3) such that no steering angle variation corresponding to the displacement of the rack (9) occurs at the steering wheel (1).

**14.** Motor vehicle steering system according to Claim 13, **characterised in that** the torque control or regulating unit (17, 18, 21) generates a defined manual torque or a defined manual torque characteristic at the steering wheel (1) by means of the second drive (3) during, before or after the autonomous displacement of the rack (9).

**15.** Motor vehicle steering system according to any one of the preceding Claims, **characterised in that** the transmission ratio of steering wheel (1) to steering pinion (8) in normal vehicle operation is varied according to the running state, in particular according to the speed of the vehicle.

**16.** Motor vehicle steering system according to any one of the preceding Claims, **characterised in that** the first electronic control unit (14) compensates for a torque at the pinion (8) which is generated by the torque control unit or a force acting on the rack (9).

**17.** Motor vehicle steering system according to any one of the preceding Claims, **characterised in that** the torque control or regulating unit controls the second drive (3) such that the casing of the planetary gear unit (5) only pivots or rotates about a zero position in normal vehicle operation.

**18.** Motor vehicle steering system according to any one of the preceding Claims, **characterised in that**, when the housing of the planetary gear unit (5) is at a standstill, the transmission ratio thereof between the input side (2) and the output side (6) is not equal to 1:1, being in particular 1:1.44.

**19.** Motor vehicle steering system according to any one of the preceding Claims, **characterised in that** the torque control or regulating unit is a state controller which initially calculates a first desired quantity, in particular the desired current $i_{motor, Null}$, at which no manual torque would be produced at the steering wheel.

**20.** Motor vehicle steering system according to Claim 19, **characterised in that** a second desired quantity is added to the first desired quantity in a subsequent step, wherein the sum of the desired quantities corresponds to the respective manual torque at the steering wheel which is actually to be superposed.

**21.** Motor vehicle steering system according to Claim 19 or 20, **characterised in that** the motor vehicle steering system receives additional state quantities of the motor vehicle, which are not established via sensors, on the basis of the calculations of an observer simulating the motor vehicle.

**Revendications**

**1.** Système de direction de véhicule automobile comportant les éléments suivants :

     - un volant (1) qui est relié à une colonne de direction (2) de manière solidaire en rotation ;
     - un pignon de direction, (8) qui engrène une crémaillère (9) ;
     - un capteur d'angle (19) pour détecter la position de la colonne de direction (2) ou du volant (1) et générer un signal correspondant ;
     - un premier entraînement (11) qui est commandé par une première commande électronique (14) et qui agit sur le pignon de direction (8) ou sur la crémaillère (9), le signal du capteur d'angle (19) pour détecter la position de la colonne de direction (2) ou du volant (1) étant un signal d'entrée pour la commande (14) ;
     - un engrenage planétaire (5) relié à la colonne de direction (2) du côté de l'entrée et au pignon de direction (8) du côté de la sortie ;
     - un second entraînement (3) qui entraîne le logement de l'engrenage planétaire (5) ;
     - une commande de couple (17, 18) qui commande le second entraînement (3) de telle manière que le couple appliqué sur le logement de l'engrenage planétaire (5) par le second entraînement (3) règle un couple manuel déterminé sur le volant (1),

**caractérisé en ce que**
le second entraînement est un moteur à arbre creux dont le rotor est fixé à demeure au logement de l'engrenage planétaire (5).

2. Système de direction de véhicule automobile selon la revendication 1, **caractérisé en ce que** la commande de couple (17, 18) du second entraînement (3) est découplée de la première commande électronique (14) du premier entraînement (11) .

3. Système de direction de véhicule automobile selon la revendication 1 ou 2, **caractérisé en ce que** la première commande (14) est montée, sur la base de signaux de capteur, notamment de signaux d'angle d'embardée, pour appliquer un angle de direction supplémentaire ($\phi_{ESP}$)par le biais du premier entraînement (11) conçu notamment comme une servocommande, et **en ce que** la commande de couple (17, 18) commande le second entraînement (3) de telle manière qu'une réaction de cet angle de direction supplémentaire ($\phi_{ESP}$) est réduite ou compensée sur le volant (1).

4. Système de direction de véhicule automobile selon l'une quelconque des revendications précédentes, **caractérisé en ce que**, notamment lors de l'arrêt du second entraînement (3), un couplage mécanique forcé entre le volant (1) et la crémaillère (9) est réalisé par la fixation du logement de l'engrenage planétaire (5).

5. Système de direction de véhicule automobile selon la revendication 4, **caractérisé en ce que** la fixation s'effectue par complémentarité de formes ou par pression, ou par le biais d'une mise en prise par boulon ou au moyen d'un frein.

6. Système de direction de véhicule automobile selon l'une quelconque des revendications précédentes, **caractérisé en ce qu'**un capteur de couple (20) est agencé dans la timonerie de direction entre un volant (1) et un pignon de direction (8) .

7. Système de direction de véhicule automobile selon l'une quelconque des revendications précédentes, **caractérisé en ce que** le capteur de couple (20) détecte le couple manuel s'appliquant sur le volant (1) et génère un signal correspondant.

8. Système de direction de véhicule automobile selon la revendication 6 ou 7, **caractérisé en ce que** le signal du capteur de couple (20) est une grandeur d'entrée de la commande de couple ou de la régulation de couple (21), au moyen de laquelle un couple manuel correspondant à l'état du véhicule est réglé au moyen du second entraînement (3).

9. Système de direction de véhicule automobile selon la revendication 8, **caractérisé en ce que** d'autres paramètres d'état du véhicule forment des grandeurs d'entrée pour la commande de couple ou la régulation de couple (21).

10. Système de direction de véhicule automobile selon la revendication 1, **caractérisé en ce que** deux moteurs d'arbre creux (30a, 30b) enveloppent le logement de l'engrenage planétaire (5), leurs rotors étant fixés à demeure avec le logement ou dans lesquels le logement est un composant des rotors.

11. Système de direction de véhicule automobile selon l'une quelconque des revendications précédentes, **caractérisé en ce qu'**un autre entraînement redondant est prévu en cas de défaillance ou de dérangement du second entraînement pour générer un couple manuel.

12. Système de direction de véhicule automobile selon l'une quelconque des revendications précédentes, **caractérisé en ce que** la première commande électronique (14) traite les signaux d'un programme de stabilité de véhicule électronique.

13. Système de direction de véhicule automobile selon l'une quelconque des revendications précédentes, **caractérisé en ce que** sur demande lors du fonctionnement du premier entraînement (11), un déplacement autonome de la crémaillère (9) s'effectue sans angle d'embardée souhaité correspondant provoqué sur le volant (1) et **en ce qu'**avec le second entraînement (3), l'engrenage planétaire (5) est commandé de telle manière qu'il ne se produit sur le volant (1) aucune modification d'angle du volant correspondant au déplacement de la crémaillère (9).

14. Système de direction de véhicule automobile selon la revendication 13, **caractérisé en ce que** la commande de couple ou la régulation de couple (17, 18, 21) génère pendant, avant ou après le déplacement autonome de la crémaillère (9), un couple manuel défini ou un écoulement de couple manuel défini sur le volant (1) au moyen du second entraînement (3).

15. Système de direction de véhicule automobile selon l'une quelconque des revendications précédentes, **caractérisé en ce que** le rapport de transformation entre le volant (1) et le pignon de direction (8) varie en fonction de l'état du véhicule, notamment de la vitesse du véhicule.

16. Système de direction de véhicule automobile selon l'une quelconque des revendications précédentes, **caractérisé en ce que** la première commande électronique (14) compense un couple généré par la commande de couple sur le pignon (8) ou une force agissant sur la crémaillère (9).

17. Système de direction de véhicule automobile selon l'une quelconque des revendications précédentes, **caractérisé en ce que** la commande de couple ou la régulation de couple commande le second entraînement (3) de telle manière que le logement de l'engrenage planétaire (5) ne pivote ou ne tourne qu'autour d'une position zéro pendant un fonctionnement normal.

18. Système de direction de véhicule automobile selon l'une quelconque des revendications précédentes, **caractérisé en ce que** lors de l'arrêt du logement de l'engrenage planétaire (5), son rapport de transformation entre un côté d'entrée (2) et un côté de sortie (6) est différent de 1/1, notamment de 1/1,44.

19. Système de direction de véhicule automobile selon l'une quelconque des revendications précédentes, **caractérisé en ce que** la commande de couple ou la régulation de couple est un régulateur d'état qui calcule d'abord une première grandeur théorique, notamment le courant théorique $i_{moteur, zéro}$, avec lequel aucun couple manuel ne se produirait sur le volant.

20. Système de direction de véhicule automobile selon la revendication 19, **caractérisé en ce que** dans une étape suivante de la première grandeur théorique, une seconde grandeur théorique est totalisée, la somme des grandeurs théoriques correspondante au couple manuel respectif à appliquer actuellement sur le volant.

21. Système de direction de véhicule automobile selon la revendication 19 ou 20, **caractérisé en ce que** la système de direction de véhicule automobile reçoit des grandeurs d'état supplémentaires du véhicule automobile, qui ne sont pas détectées par les capteurs, sur la base des calculs d'un observateur simulant le véhicule automobile.

Fig. 1

Fig. 2

Zusätzliche Hilfsgrößen
(Fahrzeuggeschwindigkeit, ...)

18

1

Kennlinien

$\varphi_{ESP}$

$\varphi_{Steu,soll}$

19

2

5

Si-Motor

$T_{Sensor,ref}$

Momenten Steuerung

17

$\varphi_{Pinion,ist}$

16

15

3

Rack-Motor

8  9

10

$i_{Motor,soll}$

Lage-Regler

12

11

14

$i_{Rack,soll}$

Fig. 3

EP 1 453 718 B1

fig. 4

Fig. 5

Fig. 6